# EUROPEAN PATENT APPLICATION

(11) **EP 1 721 664 A1**
(43) Date of publication of application: **15.11.2006**
(21) Application number: 05719876.4
(22) Date of filing: 03.03.2005
(51) Int. Cl.: B01J 20/281

(54) **SEPARATING AGENT FOR OPTICAL ISOMER**

(30) Priority: 04.03.2004 JP 2004060152
(71) Applicant: DAICEL CHEMICAL INDUSTRIES, LTD., Sakai-shi, Osaka 590-8501 (JP)
(72) Inventor: KAGAMIHARA, Yasuhiro, 3050047 (JP); MURAKAMI, Tatsushi, Ibaraki 305-0047 (JP)
(74) Representative: Grünecker, Kinkeldey, Stockmair & Schwanhäusser Anwaltssozietät
(86) International application number: PCT/JP2005/003572
(87) International publication number: WO 2005/085835

(57) **Abstract**

The present invention provides a separating agent for enantiomeric isomers which exhibits stable separating performance, high optical resolving power, and sufficient solvent resistance at the same time. The separating agent for enantiomeric isomers includes an optically active polymer compound such as cellulose or amylose carried on a carrier such as silica gel through chemical bonding and has a specific surface area of 10 to 150 m²/g and an average particle size of 1 to 100 µm.

## Description

### Technical Field

The present invention relates to a separating agent for enantiomeric isomers (optical isomers), and more particularly, to a separating agent for enantiomeric isomers to be suitably used for high performance liquid chromatography (HPLC).

### Background Art

Polysaccharides or derivatives thereof such as ester or carbamate derivatives of cellulose or amylose have been hitherto known well to exhibit high optical resolving power. Further, separating agents for chromatography having the polysaccharides or derivatives thereof physically adsorbed or carried on silica gel have been also hitherto known well as excellent separating agents each exhibiting extensive optical resolving power, a large theoretical plate number, and high durability (Nonpatent Document 1).

However, the separating agents can be used only under restricted selections of separation conditions. Since the polysaccharide derivatives are carried on silica gel through physical adsorption, solvents for dissolving the polysaccharide derivatives cannot be used for mobile phases and the like. Further, solvents for dissolving samples are also restricted. Asamplehaving a low solubility in the solvents that can be used as the mobile phases causes a serious problem particularly in chromatographic separation. Moreover, there is another inconvenience that only limited washing fluids can be used in washing away contaminants strongly adsorbed on the separating agents. In consideration of those points, a separating agent having a polysaccharide derivative carried thereon and having a solvent resistance has been strongly required.

In order to solve such problems, there has been reported a method of fixing a polysaccharide derivative on a carrier.

For example, Patent Document 1 discloses a separating agent for enantiomeric isomers prepared through direct copolymerization of a polysaccharide derivative having a vinyl group introduced into a hydroxyl group site of polysaccharides through an ester bond or a urethane bond with a porous carrier having a vinyl group introduced thereinto.

The inventors of the present invention discloses in Patent Document 2 a technique of chemically bonding a polysaccharide derivative to silica gel through an isocyanate derivative for securing stability of both the polysaccharide derivative and silica gel, and discloses in Patent Document 3 a method of performing radical copolymerization of styrene and divinylbenzene on silica gel carrying a cellulose derivative for netting and fixing of the cellulose derivative.

However, in those production methods, separating agents produced by the same method often have varying performance, and the production methods have room for improvement.
Patent Document 1: JP-A-04-202141
Patent Document 2: JP-B-07-30122
Patent Document 3: JP-A-11-171800
Nonpatent Document 1: Y. Okamoto, M. Kawashima and K. Hatada, J. Am. Chem. Soc., 106, 5357, 1984

### Disclosure of the Invention

### Problem to be solved by the Invention

The present invention provides a separating agent for enantiomeric isomers having stable separating performance without variation among separating agents.

### Means for solving the Problems

The present invention provides as means for solving the problems a separating agent for enantiomeric isomers including an optically active polymer compound carried on a carrier, which has a specific surface area of 10 to 150 m²/g and an average particle size of 1 to 100 µm.
The present invention provides a use of the above-mentioned separating agent for separation of enantiomeric isomers, and a method of separating enantiomeric isomers including: bringing the above-mentioned separating agent into contact with an enantiomeric isomer mixture; and separating the enantiomeric isomers.

The specific surface area of the separating agent of the present invention is measured by a BET method. In the separating agent of the present invention, the specific surface area of the separating agent is not equal to the specific surface area of the carrier.

The average particle size of the separating agent of the present invention is measured by an electric resistance method (e.g., Coulter counter method). The average particle size of the separating agent is not exactly equal to the average particle size of the carrier because the separating agent includes an optically active polymer compound carried on the carrier, but is substantially equal (in a 1 µm order) to the particle size of the carrier.

### Effects of the Invention

The separating agent for enantiomeric isomers of the present invention has a specific surface area and an average particle size within predetermined ranges, and thus is capable of exhibiting high optical resolving power and stable separating performance and hardly has variation among separating agents.

### Best Mode for carrying out the Invention

Examples of an optically active polymer compound to be included in a separating agent for enantiomeric isomers of the present invention include: methacrylate, methacrylamide, acrylate, or acrylamide each having no optically active substituent, methacrylate, methacrylamide, acrylate, or acrylamide each having an optically active substituent, polystyrene, or polyacetylene; a copolymer thereof; a polysaccharide and a derivative thereof; a peptide; and a protein. In particular, methacrylate, acrylamide, a polysaccharide and a derivative thereof, a protein, and the like which are known to have asymmetry identifying ability are desired.

Of those, a polysaccharide or a derivative thereof is particularly preferred, and they may be any of a synthetic polysaccharide, a natural polysaccharide, and a natural products modified polysaccharide as long as the polysaccharide or the derivative thereof is optically active. However, the polysaccharide or the derivative thereof preferably has a highly regulated bonding manner.

Examples of the polysaccharide and derivative thereof include: β-1,4-glucan (cellulose); α-1,4-glucan (amylose or amylopectin); α-1,6-glucan (dextran); β-1,6-glucan (pustulan); β-1,3-glucan (such as curdlan or schizophyllan); α-1,3-glucan; β-1,2-glucan (a Crown Gall polysaccharide); β-1,4-galactan; β-1, 4-mannan; α-1, 6-mannan; β-1,2-fructan (inulin) ; β-2, 6-fructan (levan); β-1,4-xylan; β-1,3-xylan; β-1,4-chitosan; α-1,4-N-acetylchitosan (chitin); pullulan; agarose; alginic acid; and starch containing amylose. Of those, cellulose, amylose, β-1,4-xylan, β-1,4-chitosan, chitin, β-1,4-mannan, inulin, curdlan, and the like are preferred because they easily enables highly pure polysaccharides to be obtained. Cellulose and amylose are particularly preferred.

A number average degree of polymerization of those polysaccharides (i.e., average number of pyranose rings or furanose rings per 1 molecule) is 5 or more, and preferably 10 or more. The number average degree of polymerization thereof has no upper limit, but is desirably 500 or less from a viewpoint of easy handling.

An example of the polysaccharide derivative is a compound prepared through derivatization of a compound having on part of hydroxyl groups of the above-mentioned polysaccharide a functional group capable of reacting with the hydroxyl groups through an ester bond or a urethane bond by a conventional method. The compound having a functional group capable of reacting with the hydroxyl groups may be any of an isocyanic acid derivative, a carboxylic acid, an ester, an acid halide, an acid amide, a halide, an epoxy compound, an aldehyde, an alcohol, or a compound having a leaving group. An aliphatic, alicyclic, aromatic, or heteroaromatic compound thereof may be used. Of those compounds, a phenyl isocyanate compound substituted by a halogen atom or an alkyl group having 1 to 3 carbon atoms is particularly preferably used.

Particularly preferred examples of the polysaccharide derivative include a polysaccharide ester derivative or a polysaccharide carbamate derivative each having 0.1 or more ester bond or urethane bond per 1 monosaccharide.

The carrier included in a separating agent for enantiomeric isomers of the present invention includes a porous organic carrier or a porous inorganic carrier. The porous inorganic carrier is preferred. Appropriate examples of the porous organic carrier include polymer substances such as polystyrene, polyacrylamide, and polyacrylate. Appropriate examples of the porous inorganic carrier include silica, alumina, magnesia, glass, kaolin, titanium oxide, a silicate, and hydroxyapatite. A particularly preferred carrier is silica gel.

The carrier has an average particle size of 1 µm to 100 µm, and preferably 1 µm to 70 µm, and an average pore size of preferably 100 Å to 1,500 Å, and more preferably 250 Å to 800 Å. The carrier is desirably subj ected to surface treatment for eliminating an effect of a remaining silanol group on its surface, but needs not be subjected to surface treatment. The particle size of the carrier is equal to the particle size of the separating agent for enantiomeric isomers.

The separating agent for enantiomeric isomers has a specific surface area of 10 to 150 m²/g, preferably 10 to 100 m²/g, and more preferably 20 to 70 m²/g.

The specific surface area of the separating agent for enantiomeric isomers is not equal to the specific surface area of the carrier, and the specific surface area of the separating agent for enantiomeric isomers is larger or smaller than the specific surface area of the carrier.

For explanation of upper limits for the above-mentioned three levels of numerical limitation, in the case where a carrier having a specific surface area of more than 150 m²/g, 100 m²/g, or 70 m²/g is used, an optically active polymer compound may be carried on the carrier, to thereby reduce a specific surface area of a separating agent to 150 m²/g or less, 100 m²/g or less, or 70 m²/g or less, and enhance and stabilize separating performance.

In contrast, for explanation of lower limits for the above-mentioned three levels of numerical limitation, in the case where a carrier having a specific surface area of less than 10 m²/g or 20 m²/g is used, an optically active polymer compoundmay be carried on the carrier, to thereby increase a specific surface area of a separating agent to 10 m²/g or more or 20 m²/g or more, and enhance and stabilize separating performance.

In the present invention, a method of allowing a carrier to carry an optically active compoundmay involve physical adsorption, but the carrier and the optically active compound are preferably chemically bonded.

A method of chemically bonding an optically active polymer compound to a carrier is known (see JP-A-63-277149, JP-A-04-202141, and JP-A-2002-148247, for example), and examples thereof include: a method of chemically bonding an optically active polymer compound to a carrier through a spacer (indirect bonding) ; a method of chemically bonding an optically active polymer compound to a carrier directly; and a method involving introducing a polymerizable functional group into a carrier and/or an optically active compound, and polymerizing the carrier and the optically active polymer compound.

Examples of a bonding manner for chemically bonding the optically active polymer compound to the carrier or the spacer include covalent bonds each formed through polymerization of a polymer group such as an amide bond, a urethane bond, an ester bond, or a vinyl bond.

Examples of the method of allowing a carrier to carry an optically active polymer compound through a spacer include: (I) a method involving reacting a polyfunctional reactive derivative such as a polyfunctional isocyanate derivative or acid chloride derivative with a carrier having an amino group, a monosubstituted amino group, a hydroxyl group, or a mercapto group, or with a carrier having no such active hydrogen and subjected to treatment with a treatment containing an amino group, a monosubstituted amino group, a hydroxyl group, or a mercapto group, and then reacting an optically active polymer compound having active hydrogen such as an amino group, a monosubstituted amino group, a hydroxyl group, or a mercapto group with the resultant; and (II) a method, which is reverse of the method (I), involving reacting the polyfunctional reactive derivative with an optically active polymer compound, and then reacting the resultant with a carrier.

The method of chemically bonding an optically active polymer compound to a carrier refers to a method of bonding a functional group of an optically active polymer compound to a carrier directly without use of a spacer. Examples of the method include: a method involving allowing a carrier to carry an optically active polymer compound having a polymerizable functional group introduced thereinto, and then polymerizing the whole; and a method involving allowing a carrier to carry an optically active polymer compound, and then polymerizing the whole with UV, γ rays, or the like. For example, JP-A-08-59702, JP-A-11-171800, JP-A-2004-167343, and JP-A-11-510193 may be referred to.

The separating agent for enantiomeric isomers having predetermined specific surface area and average particle size of the present invention may be produced by applying a method involving: using a carrier having an average particle size of 1 µm to 100 µm (preferably 1 µm to 70 µm) and a specific surface area of 10 to 150 m²/g (preferably 10 to 100 m²/g, and more preferably 20 to 70 m²/g) (provided that the specific surface area may be out of the above-mentioned ranges. Desirably, the average pore size is preferably 100 Å to 1,500 Å, and more preferably 250 Å to 800 Å); and bonding the carrier and an optically active polymer compound such that a carried amount in the separating agent (that is, a ratio of the optically active polymer compound in the separating agent) described in Examples falls within a range of 15 to 23%. A method of adjusting a saccharide bonding ratio in the separating agent may employ a method involving separating a predetermined amount of an optically active polymer compound (e.g., saccharide), and bringing the optically active polymer compound into contact with a carrier in a solvent in one step or in several steps.

The separating agent for enantiomeric isomers of the present invention is useful as a separating agent for chromatography such as gas chromatography, liquid chromatography, and thin layer chromatography. In particular, the separating agent for enantiomeric isomers of the present invention is preferably used as a separating agent for liquid chromatography, and more preferably used as a filler for simulated moving bed chromatography.

### Examples

The present invention will be described in detail by way of examples, but the present invention is not limited to the examples.

Method of measuring specific surface area of separating agent obtained in each of Synthesis Examples 1 to 7
Method of measuring specific surface area: multi-point BET method
Measurement apparatus: High speed specific surface area/pore size distribution measurement apparatus NOVA-1200 (manufactured by Yuasa Ionics Inc.)
Pretreatment conditions: A sample was placed in a measurement cell, and degassed at 60°C (under vacuum) for 10 minutes.
Adsorption gas: nitrogen gas
Cell size: small pellet cell of 1.80 cm³ (stem outer diameter of 9 mm)
Measurement points: three points on adsorbed side at 0. 1, 0.2, and 0.3
Analysis items: one-point BET, multi-point BET, and Langmuir specific surface area
Number of measurements: Measurement was performed three times with different samples. A specific surface area shown is an average value of three measurements.

Method of measuring specific surface area of separating agent obtained in each of Synthesis Examples 8 to 17
Method of measuring specific surface area: one-point BET method
Measurement apparatus: BET surface area analyzer Macsorb (HM model-1201) (manufactured by Mountech Co., Ltd.)
Pretreatment conditions: A sample was placed in a measurement cell, and degassed at 75 °C for 15 minutes under standard gas conditions (N₂ 30%, He 70%).
Measurement principle: flow process (one-point BET method)
Adsorption gas: nitrogen gas

### Synthesis Example 1 (synthesis of separating agent having specific surface area within range of 10 to 150 m²/g)

10 g of silica gel (average particle size of 5 µm and specific surface area of 25 m²/g) subjected to surface treatment with a silane treatment having an amino group on its terminal, and 1. 5 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.3 g of 4-dimethyl aminopyridine was added to the obtained saccharide-bonded silica gel, and the mixture was dispersed in 30 mL of DMAC. Then, 6.8 g of 3, 5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 34.7 m²/g.

The obtained separating agent was packed into a stainless steel column having a length of 15 cm and an inner diameter of 0.46 cm by a slurry packing method, to thereby obtain a separation column.

### Synthesis Example 2 (synthesis of separating agent having specific surface area within range of 10 to 150 m²/g)

10 g of silica gel (average particle size of 5 µm and specific surface area of 34 m²/g) subjected to surface treatment with a silane treatment having an amino group on its terminal, and 1.4 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.3 g of 4-dimethyl aminopyridine was added to the obtained saccharide-bonded silica gel, and the mixture was dispersed in 30 mL of DMAC. Then, 6.2 g of 3,5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 44.7 m²/g.

The obtained separating agent was packed into a stainless steel column having a length of 15 cm and an inner diameter of 0.46 cm by a slurry packing method, to thereby obtain a separation column.

### Synthesis Example 3 (synthesis of separating agent having specific surface area within range of 10 to 150 m²/g)

10 g of silica gel (average particle size of 5 µm and specific surface area of 50 m²/g) subjected to surface treatment with a silane treatment having an amino group on its terminal, and 1.0 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.3 g of 4-dimethyl aminopyridine was added to the obtained saccharide-bonded silica gel, and the mixture was dispersed in 30 mL of DMAC. Then, 7.2 g of 3, 5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 48.1 m²/g.

The obtained separating agent was packed into a stainless steel column having a length of 15 cm and an inner diameter of 0.46 cm by a slurry packing method, to thereby obtain a separation column.

### Synthesis Example 4 (synthesis of separating agent having specific surface area within range of 10 to 150 m²/g)

10 g of silica gel (average particle size of 5 µm and specific surface area of 30 m²/g) subjected to surface treatment with a silane treatment having an amino group on its terminal, and 1.0 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.3 g of 4-dimethyl aminopyridine was added to the obtained saccharide-bonded silica gel, and the mixture was dispersed in 30 mL of DMAC. Then, 6. 8 g of 3, 5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 64.0 m²/g.

The obtained separating agent was packed into a stainless steel column having a length of 15 cm and an inner diameter of 0.46 cm by a slurry packing method, to thereby obtain a separation column.

### Synthesis Example 5 (synthesis of separating agent having specific surface area within range of 10 to 150 m²/g)

10 g of silica gel (average particle size of 5 µm and specific surface area of 101 m²/g) subjected to surface treatment with a silane treatment having an amino group on its terminal, and 1. 0 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.3 g of 4-dimethyl aminopyridine was added to the obtained saccharide-bonded silica gel, and the mixture was dispersed in 30 mL of DMAC. Then, 6.8 g of 3,5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 82.6 m²/g.

The obtained separating agent was packed into a stainless steel column having a length of 15 cm and an inner diameter of 0.46 cm by a slurry packing method, to thereby obtain a separation column.

### Synthesis Example 6 (synthesis of separating agent having specific surface area within range of 10 to 150 m²/g)

10 g of silica gel (average particle size of 5 µm and specific surface area of 100 m²/g) subjected to surface treatment with a silane treatment having an amino group on its terminal, and 0.8 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.3 g of 4-dimethyl aminopyridine was added to the obtained saccharide-bonded silica gel, and the mixture was dispersed in 30 mL of DMAC. Then, 8.2 g of 3, 5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 128 m²/g.

The obtained separating agent was packed into a stainless steel column having a length of 15 cm and an inner diameter of 0.46 cm by a slurry packing method, to thereby obtain a separation column.

### Synthesis Example 7 (synthesis of separating agent having specific surface area larger than 150 m²/g)

10 g of silica gel (average particle size of 5 µm and specific surface area of 270 m²/g) subjected to surface treatment with a silane treatment having an amino group on its terminal, and 0.7 g of amylose were dispersed in 38 mL of DMSO at 70°C. Then, 250 µL of a borane pyridine complex and 190 µL of acetic acid were added to the dispersion, and the mixture was stirred for 20 hours in a nitrogen atmosphere. A stirred mixture was separated through filtration with a glass filter, and a residue was washed with DMSO and methanol and then dried under vacuum, to thereby obtain saccharide-bonded silica gel.

0.6 g of 4-dimethyl aminopyridine was added to the obtained saccharide-bonded silica gel, and the mixture was dispersed in 30 mL of DMAC. Then, 10.9 g of 3,5-dimethylphenyl isocyanate was added to the mixture, and the whole was stirred at 75°C for 48 hours in a nitrogen atmosphere. A stirred mixture was separated through filtration with a glass filter, and a residue was washed with DMAC and methanol and then dried under vacuum, to thereby obtain a target separating agent for enantiomeric isomers. The separating agent was subjected to specific surface area measurement by a BET method, and the specific surface area was 200 m²/g.

The obtained separating agent was packed into a stainless steel column having a length of 15 cm and an inner diameter of 0.46 cm by a slurry packing method, to thereby obtain a separation column.

### Examples 1 to 6

Optical separation of hexobarbital and benzoin ethyl ether was performed through liquid chromatography by using each of the separation columns obtained in Synthesis Examples 1 to 6.

Hexobarbital was analyzed under analysis conditions of: a moving phase of hexane (H) /THF = 70/30: a flow rate of 1.0 mL/minute; temperature of 25°C; and a detection wavelength of 254 nm. Benzoin ethyl ether was analyzed under analysis conditions of: a moving phase of hexane(H)/ethyl acetate(EA) = 80/20; a flow rate of 1.0 mL/minute; a temperature of 25°C; and a detection wavelength of 254 nm. Note that a separation factor (α) in tables was determined through the following equation.

Separation factor (α) = k1'/k2'
Note that k1' and k2' are represented by k1' = (t1-t0)/t0, k2' = (t2-t0)/t0, respectively. t1 and t2 represent elution times of respective enantiomeric isomers, and t0 represents an elution time of tri-tert-butylbenzene. Table 1 shows the results.

### Comparative Example 1

Optical separation of hexobarbital and benzoin ethyl ether was performed in the same manner as in Example 1 by using the separation column obtained in Synthesis Example 7. Table 1 shows the results.

**[Table 1]**

| | Carrier | Separating agent for enantiomeric isomers | | | |
|---|---|---|---|---|---|
| | Specific surface area (m²/g) | Kind of separating agent | Specific surface area (m²/g) | Separation factor (α) | |
| | | | | Hexobarbital | Benzoin ethyl ether |
| Example 1 | 25 | Synthetic Example 1 | 34.7 | 2.1 | 3.6 |
| Example 2 | 34 | synthetic Example 2 | 44.7 | 2.1 | 3.6 |
| Example 3 | 50 | Synthetic Example 3 | 48.1 | 2.1 | 3.5 |
| Example 4 | 30 | Synthetic Example 4 | 64.0 | 2.0 | 3.5 |
| Example 5 | 101 | Synthetic Example 5 | 82.6 | 2.0 | 3.4 |
| Example 6 | 100 | Synthetic Example 6 | 128 | 1.9 | 3.2 |
| Comparative Example 1 | 270 | Synthetic Example 7 | 200 | 1.6 | 2.3 |

### Synthesis Example 8 (Synthesis of separating agent having specific surface area within range of 10 to 150 m²/g)

10 g of a filler (polymer carried ratio: 20 wt%) prepared by allowing cellulose tris (3,5-dimethylphenylcarbamate) produced by a known method to be carried on silica gel (average particle size of 20 µm and specific surface area of 18 m²/g) subjected to surface treatment with a silane treatment having an amino group on its terminal through physical adsorption was suspended and stirred in 500 ml of a mixed solvent of water/acetonitrile. The suspension was irradiated with UV for 45 minutes by a method described in JP-A-11-510193, and then a solid was collected through filtration. Over heat reflux washing of the solid with tetrahydrofuran, which is a good solvent of a polymer, was repeated four times, and in addition, the solid was washed with methanol, to thereby remove an unreacted polymer and obtain a target separating agent for enantiomeric isomers. The separating agent was subjected to specific surface area measurement by a BET method (one-point method), and the specific surface area was "54 m²/g". The obtained separating agent was packed into a stainless steel column having a length of 25 cm and an inner diameter of 0.46 cm by a slurry packing method, to thereby obtain a separation column.

### Synthesis Example 9 (Synthesis of separating agent having specific surface area within range of 10 to 150 m²/g)

A separating agent for enantiomeric isomers was obtained in the same manner as in Synthesis Example 8 except that silica gel (average particle size of 20 µm and specific surface area of 42 m²/g) subjected to surface treatment with a silane treatment having an amino group on its terminal was used. The separating agent was subjected to specific surface area measurement by a BET method (one-point method), and the specific surface area was "82 m²/g". The obtained separating agent was packed into a stainless steel column having a length of 25 cm and an inner diameter of 0.46 cm by a slurry packing method, to thereby obtain a separation column.

### Synthesis Example 10 (Synthesis of separating agent having specific surface area within range of 10 to 150 m²/g)

A separating agent for enantiomeric isomers was obtained in the same manner as in Synthesis Example 8 except that silica gel (average particle size of 20 µm and specific surface area of 85 m²/g) subjected to surface treatment with a silane treatment having an amino group on its terminal was used. The separating agent was subjected to specific surface area measurement by a BET method (one-point method), and the specific surface area was "127 m²/g". The obtained separating agent was packed into a stainless steel column having a length of 25 cm and an inner diameter of 0.46 cm by a slurry packing method, to thereby obtain a separation column.

### Synthesis Example 11 (Synthesis of separating agent having specific surface area larger than 150 m²/g)

A separating agent for enantiomeric isomers was obtained in the same manner as in Synthesis Example 8 except that silica gel (average particle size of 20 µm and specific surface area of 259 m²/g) subjected to surface treatment with a silane treatment having an amino group on its terminal was used. The separating agent was subjected to specific surface area measurement by a BET method (one-point method), and the specific surface area was "266 m²/g". The obtained separating agent was packed into a stainless steel column having a length of 25 cm and an inner diameter of 0.46 cm by a slurry packing method, to thereby obtain a separation column.

### Examples 7 to 9

Optical separation of trans-stilbene oxide, trifluoroanthryl ethanol, and benzoin was performed through liquid chromatography by using each of the separation columns obtained in Synthesis Examples 8 to 10.
All samples were analyzed under analysis conditions of: a moving phase of hexane/2-propanol = 9/1; a flow rate of 1.0 ml/minute; a temperature of 25°C; and a detection wavelength of 254 nm.

### Comparative Example 2

Optical separation of trans-stilbene oxide, trifluoroanthryl ethanol, and benzoin was performed in the same manner as in Examples 7 to 9 by using the separation column obtained in Synthesis Example 11. Table 2 shows the results.

**[Table 2]**

| | Kind of separating agent | Specific surface area (m²/g) | Separation factor (α) | | |
|---|---|---|---|---|---|
| | | | Trans-stilbene oxide | Trifluoroanthryl ethanol | Benzoin |
| Example 7 | Synthesis example 8 | 54 | 1.79 | 2.50 | 1.39 |
| Example 8 | Synthesis example 9 | 82 | 1.69 | 2.30 | 1.35 |
| Example 9 | Synthesis example 10 | 127 | 1.64 | 2.12 | 1.31 |
| Example 10 | Synthesis example 12 | 56 | 1.95 | 2.71 | 1.46 |
| Example 11 | Synthesis example 13 | 56 | 1.72 | 2.45 | 1.40 |
| Comparative example 2 | Synthesis example 11 | 266 | 1.47 | 1.74 | 1.20 |

### Synthesis Example 12 (Synthesis of separating agent having specific surface area within range of 10 to 150 m²/g)

A mixture (total amount of 630 mg) of styrene, divinylbenzene, and azobisisobutylonitrile (AIBN) as a radical generator was sprinkled uniformly on 10 g of a filler (polymer carried ratio: 20 wt%) prepared by allowing cellulose tris(3,5-dimethylphenylcarbamate) produced by a known method to be carried on silica gel (average particle size of 20 µm and specific surface area of 20 m²/g) subjected to surface treatment with a silane treatment having an amino group on its terminal through physical adsorption. Then, the whole was heated at a temperature of 80°C or higher for 3 days under slow stirring.

100 ml of acetone was added to the flask, and the mixture was stirred at room temperature for 30 minutes. Then, a solid was collected through filtration. This operation was repeated three times. Finally, 100 ml of MeOH was added for washing once, to thereby obtain a target separating agent for enantiomeric isomers (carried amount of 22.4%). The separating agent was subjected to specific surface area measurement by a BET method (one-point method), and the specific surface area was "56 m²/g". The obtained separating agent was packed into a stainless steel column having a length of 25 cm and an inner diameter of 0.46 cm by a slurry packing method, to thereby obtain a separation column.

### Synthesis Example 13 (Synthesis of separating agent having specific surface area within range of 10 to 150 m²/g)

A mixture (total amount of 630 mg) of styrene, divinylbenzene, and azobisisobutylonitrile (AIBN) as a radical generator was sprinkled uniformly on 10 g of a filler (polymer carried ratio: 20 wt%) prepared by allowing cellulose tris(3,5-dimethylphenylcarbamate) produced by a known method to be carried on silica gel (average particle size of 20 µm and specific surface area of 20 m²/g) subjected to surface treatment with a silane treatment having an amino group on its terminal through physical adsorption.
The solid was dispersed in an aqueous solution prepared by adding 10 drops of a surfactant (polyoxyethylene (20) sorbitan laurate) into 100 ml of pure water. Then, the dispersion was heated at a temperature of 80°C or higher for 3 days under slow stirring, and the solid was collected through filtration. The obtained solid was returned to the flask, and 100 ml of acetone was added to the flask. The mixture was stirred at room temperature for 30 minutes, and the solid was collected through filtration. This operation was repeated three times. Finally, 100 ml of MeOH was added for washing once, to thereby obtain a target separating agent for enantiomeric isomers (carried amount of 18.6%). The separating agent was subjected to specific surface area measurement by a BET method (one-point method), and the specific surface area was "56 m²/g".

### Examples 10 to 11

Optical separation of trans-stilbene oxide, trifluoroanthryl ethanol, and benzoin was performed through liquid chromatography by using each of the separation columns obtained in Synthesis Examples 12 and 13.
All samples were analyzed under analysis conditions of: a moving phase of hexane/2-propanol = 9/1; a flow rate of 1.0 ml/minute; a temperature of 25°C; and a detection wavelength of 254 nm. Table 3 shows the results.

### Synthesis Example 14

4.0 g of tritylcellulose having about 0.9 to 1. 0 reacted trityl group in glucose unit and synthesized by a known method was dissolved in dry pyridine in a nitrogen atmosphere, and 10 ml of 4-methylphenyl isocyanate was added thereto, and the mixture was heated and stirred at 100°C for 25 hours. The mixture was poured into 700 ml of methanol, and a precipitated solid was collected through filtration, washed with ethanol, dried, and then stirred in methanol containing concentrated hydrochloric acid (containing 0.25 ml of concentrated hydrochloric acid and 40 ml of methanol per 1.0 g of a cellulose derivative), to thereby remove the trityl group. A cellulose derivative having a trityl group removed therefrom was collected through filtration, washed with ethanol, and dried, to thereby obtain cellulose-6-hydroxy-2,3-bis(4-methylphenylcarbamate).

Cellulose-6-hydroxy-2,3-bis(4-methylphenylcarbamate) mentioned above was dissolved in THF, and the resultant was sprinkled uniformly and applied on inert silica gel (average particle size of 7 µm and specific surface area of 28 m²/g). A solvent was distilled off, and then the resultant was washed with methanol, to thereby obtain silica gel carrying a cellulose derivative (polymer carried amount of 20%).

70 ml of dry toluene was added to 15 g of the silica gel carrying a cellulose derivative, and in addition a suspension containing 125 mg of toluene-2,4-diisocyanate and 10 ml of dry pyridine was added thereto, and the whole was heated and stirred at 110°C for 5 hours. After completion of a reaction, a solid was collected through filtration, washed sequentially with THF and methanol, and then dried under vacuum, to thereby obtain a filler having cellulose-6-hydroxy-2,3-bis(4-methylphenylcarbamate) fixed on silica gel. 50 ml of dry toluene and 50 ml of dry pyridine were added to the filler. In addition, 1.0 ml of 4-methylphenyl isocyanate was added thereto, and the whole was heated and stirred at 110°C for 18 hours. After completion of a reaction, a solid was collected through filtration, washed sequentially with THF and methanol, and then dried under vacuum, to thereby obtain a filler having cellulose tris(4-methylphenylcarbamate) fixed on silica gel. The separating agent was subjected to specific surface area measurement by a BET method (one-point method), and the specific surface area was "69 m²/g".

### Synthesis Example 15

Cellulose-6-hydroxy-2,3-bis(4-methylphenylcarbamate) obtained in Synthesis Example 14 was dissolved in THF, and the resultant was sprinkled uniformly and applied on inert silica gel (average particle size of 7 µm and specific surface area of 2,328 m²/g). A solvent was distilled off, and then the resultant was washed with methanol, to thereby obtain silica gel carrying a cellulose derivative (polymer carried amount of 20%).

70 ml of dry toluene was added to 15 g of the silica gel carrying a cellulose derivative, and in addition a suspension containing 125 mg of hexamethylene diisocyanate and 10 ml of dry pyridine was added thereto, and the whole was heated and stirred at 110°C for 5 hours. After completion of a reaction, a solid was collected through filtration, washed sequentially with THF and methanol, and then dried under vacuum, to thereby obtain a filler having cellulose-6-hydroxy-2,3-bis(4-methylphenylcarbamate) fixed on silica gel. 50 ml of dry toluene and 50 ml of dry pyridine were added to the filler. In addition, 1.0 ml of 4-methylphenyl isocyanate was added thereto, and the whole was heated and stirred at 110°C for 18 hours. After completion of a reaction, a solid was collected through filtration, washed sequentially with THF and methanol, and then dried under vacuum, to thereby obtain a filler having cellulose tris(4-methylphenylcarbamate)fixed onsilica gel. The separating agent was subjected to specific surface area measurement by a BET method (one-point method), and the specific surface area was "67 m²/g".

### Synthesis Example 16

Cellulose-6-hydroxy-2,3-bis(4-methylphenylcarbamate) obtained in Synthesis Example 14 was dissolved in THF, and the resultant was sprinkled uniformly and applied on inert silica gel (average particle size of 7 µm and specific surface area of 28 m²/g). A solvent was distilled off, and then the resultant was washed with methanol, to thereby obtain silica gel carrying a cellulose derivative (polymer carried amount of 20%).

70 ml of dry toluene was added to 15 g of the silica gel carrying a cellulose derivative, and a suspension containing 125 mg of diphenylmethane diisocyanate and 10 ml of dry pyridine was added thereto, and the whole was heated and stirred at 110°C for 5 hours. After completion of a reaction, a solid was collected through filtration, washed sequentially with THF and methanol, and then dried under vacuum, to thereby obtain a filler having cellulose-6-hydroxy-2,3-bis(4-methylphenylcarbamate) fixed on silica gel. 50 ml of dry toluene and 50 ml of dry pyridine were added to the filler. In addition, 1.0 ml of 4-methylphenyl isocyanate was added thereto, and the whole was heated and stirred at 110°C for 18 hours. After completion of a reaction, a solid was collected through filtration, washed sequentially with THF and methanol, and then dried under vacuum, to thereby obtain a filler having cellulose tris(4-methylphenylcarbamate) fixed on silica gel. The separating agent was subjected to specific surface area measurement by a BET method (one-point method), and the specific surface area was "65 m²/g".

### Synthesis Example 17

Cellulose-6-hydroxy-2,3-bis(4-methylphenylcarbamate) obtained in Synthesis Example 14 was dissolved in THF, and the resultant was sprinkled uniformly and applied on inert silica gel used in Synthesis Example ppp (average particle size of 7 µm and specific surface area of 23 m²/g). A solvent was distilled off, and then the resultant was washed with methanol, to thereby obtain silica gel carrying a cellulose derivative (polymer carried amount of 20%).

70 ml of dry toluene was added to 15 g of the silica gel carrying a cellulose derivative, and a suspension containing 60 mg of diphenylmethane diisocyanate and 10 ml of dry pyridine was added thereto, and the whole was heated and stirred at 110°C for 5 hours. After completion of a reaction, a solid was collected through filtration, washed sequentially with THF and methanol, and dried under vacuum, to thereby obtain a filler having cellulose-6-hydroxy-2,3-bis(4-methylphenylcarbamate) fixed on silica gel. 50 ml of dry toluene and 50 ml of dry pyridine were addedto the filler. In addition, 1.0ml of 4-methylphenyl isocyanate was added thereto, and the whole was heated and stirred at 110°C for 18 hours. After completion of a reaction, a solid was collected through filtration, washed sequentially with THF and methanol, and then dried under vacuum, to thereby obtain a filler having cellulose tris(4-methylphenylcarbamate) fixed on silica gel. The separating agent was subjected to specific surface area measurement by a BET method (one-point method), and the specific surface area was "63 m²/g".

### Examples 12 to 15

Optical separation of trifluoroanthryl ethanol, naphthyl ethyl alcohol, and cobalt tris acetylacetonate was performed through liquid chromatography by using the separation column obtained in each of Synthesis Examples 14 to 17. Table 3 shows the results.
All samples were analyzed under analysis conditions of: a moving phase of hexane/2-propanol = 9/1; a flow rate of 1.0 ml/minute; a temperature of 25°C; and a detection wavelength of 254 nm.

**[Table 3]**

| | Kind of separating agent | Specific surface area (m²/g) | Separation factor (α) | | |
|---|---|---|---|---|---|
| | | | Trifluoroanthryl ethanol | Naphthyl ethyl alcohol | Cobalt tris acetylacetonate |
| Example 12 | Synthesis example 14 | 69 | 2.07 | 1.33 | 1.24 |
| Example 13 | Synthesis example 15 | 67 | 2.16 | 1.30 | 1.33 |
| Example 14 | Synthesis example 16 | 65 | 2.21 | 1.32 | 1.34 |
| Example 15 | Synthesis example 17 | 63 | 2.13 | 1.32 | 1.40 |

## Claims

1. A separating agent for enantiomeric isomers, comprising an optically active polymer compound carried on a carrier, having a specific surface area of 10 to 150 m²/g and an average particle size of 1 to 100 µm.

2. The separating agent for enantiomeric isomers according to claim 1, wherein the optically active polymer compound is a polysaccharide or a polysaccharide derivative.

3. The separating agent for enantiomeric isomers according to claim 2, wherein the polysaccharide is cellulose or amylose.

4. The separating agent for enantiomeric isomers according to any one of claims 1 to 3, which has a specific surface area of 10 to 100 m²/g.

5. The separating agent for enantiomeric isomers according to any one of claims 1 to 4, wherein the carrier and the optically active polymer compound are chemically bonded directly or indirectly.

6. Use of the separating agent according to any one of claims 1 to 5 for separation of enantiomeric isomers.

7. A method of separating enantiomeric isomers comprising:
bringing the separating agent according to claim 1 into contact with an enantiomeric isomer mixture; and
separating an enantiomeric isomer.
